# EUROPEAN PATENT SPECIFICATION

(11) **EP 4 218 168 B1**
(45) Date of publication and mention of the grant of the patent: **24.12.2025**
(21) Application number: 21727651.8
(22) Date of filing: 29.04.2021
(51) Int. Cl.: H04L 9/40, H04L 67/56, H04W 12/122

(54) **METHODS, SYSTEMS, AND COMPUTER READABLE MEDIA FOR MITIGATING 5G ROAMING SPOOFING ATTACKS**
VERFAHREN, SYSTEME UND COMPUTERLESBARE MEDIEN ZUR ABSCHWÄCHUNG VON SPOOFING-ANGRIFFEN BEI 5G-ROAMING
PROCÉDÉS, SYSTÈMES ET SUPPORTS LISIBLES PAR ORDINATEUR POUR ATTÉNUER DES ATTAQUES PAR MYSTIFICATION EN ITINÉRANCE 5G

(30) Priority: 25.09.2020 IN 202041041754; 02.11.2020 IN 202041047779; 11.11.2020 US 202017095420; 21.12.2020 US 202017129441
(43) Date of publication of application: 02.08.2023
(73) Proprietor: Oracle International Corporation, Redwood Shores, CA 94065 (US)
(72) Inventor: RAJPUT, Jay, Bangalore, Karnataka 560103 (IN); MAHALANK, Shashikiran Bhalachandra, Bangalore 560076 (IN)
(74) Representative: Gill Jennings & Every LLP
(86) International application number: PCT/US2021/029973
(87) International publication number: WO 2022/066227

(56) References cited:
- DEUTSCHE TELEKOM AG: "N32 message anti-spoofing within the SEPP", vol. SA WG3, no. Belgrade (Serbia); 20180416 - 20180420, 20 April 2018 (2018-04-20), XP051433232, Retrieved from the Internet <URL:http://www.3gpp.org/ftp/Meetings%5F3GPP%5FSYNC/SA3/Docs/> [retrieved on 20180420]
- HUAWEI ET AL: "New Annex for the SEPP in TR 33.926", vol. SA WG3, no. Sapporo (Japan); 20190624 - 20190628, 17 June 2019 (2019-06-17), XP051753120, Retrieved from the Internet <URL:http://www.3gpp.org/ftp/tsg%5Fsa/WG3%5FSecurity/TSGS3%5F95Bis%5FSapporo/Docs/S3%2D192180%2Ezip> [retrieved on 20190617]

## Description

### TECHNICAL FIELD

The subject matter described herein relates to enhancing security in 5G communication networks. More particularly, the subject matter described herein relates to methods, systems, and computer readable media for mitigating 5G roaming spoofing attacks.

### BACKGROUND

In 5G telecommunications networks, the network node that provides service is referred to as a producer network function (NF). A network node that consumes services is referred to as a consumer NF. A network function can be both a producer NF and a consumer NF depending on whether it is consuming or providing service.

A given producer NF may have many service endpoints, where a service endpoint is the point of contact for one or more NF instances hosted by the producer NF. The service endpoint is identified by a combination of Internet protocol (IP) address and port number or a fully qualified domain name that resolves to an IP address and port number on a network node that hosts a producer NF. An NF instance is an instance of a producer NF that provides a service. A given producer NF may include more than one NF instance. It should also be noted that multiple NF instances can share the same service endpoint.

Producer NFs register with a network function repository function (NRF). The NRF maintains service profiles of available NF instances identifying the services supported by each NF instance. Consumer NFs can subscribe to receive information about producer NF instances that have registered with the NRF.

In addition to consumer NFs, another type of network node that can subscribe to receive information about NF service instances is a service communication proxy (SCP). The SCP subscribes with the NRF and obtains reachability and service profile information regarding producer NF service instances. Consumer NFs connect to the SCP, and the SCP load balances traffic among producer NF service instances that provide the required service or directly routes the traffic to the destination producer NF instance.

In addition to the SCP, other examples of intermediate proxy nodes or groups of network nodes that route traffic between producer and consumer NFs include the security edge protection proxy (SEPP), the service gateway, and nodes in the 5G service mesh. The SEPP is the network node used to protect control plane traffic that is exchanged between different 5G public land mobile networks (PLMNs). As such, the SEPP performs message filtering, policing and topology hiding for all application programming interface (API) messages.

One vulnerability that exists with the current 5G network architecture occurs on the N32 interface, which is the interface between SEPPs. As indicated above, an SEPP acts as the security screening node for a public land mobile network (PLMN). The N32 control or N32-c interface is used for the exchange of control messages with a remote SEPP. Initiation of communications on the N32-c interface involves a transport layer security (TLS) handshake procedure to establish a TLS connection. Initiation of communications also involves an N32-c security capability negotiation procedure, which involves the exchange of N32-c messages. During the N32-c security capability negotiation procedure, there is no validation of the remote endpoint's identity. The remote endpoint also does not validate the initiating SEPP's identity. Because of the lack of validation on the N32-c interface, the initiating and responding SEPPs are vulnerable to spoofing attacks where a third party impersonates one end of the N32-c communications to gain unauthorized access to the PLMN.

In light of these and other difficulties, there exists a need for methods, systems, and computer readable media for mitigating 5G roaming spoofing attacks.

DEUTSCHE TELEKOM AG, "N32 message anti-spoofing within the SEPP", vol. SA WG3, no. Belgrade (Serbia); 20180416 - 20180420, (20180420), 3GPP DRAFT; S3-181480 N32 MESSAGE ANTI-SPOOFING WITHIN THE SEPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings%5F3GPP%5FSYNC/SA3/Docs/, (20180420), XP051433232 discloses a proposal for N32 message anti-spoofing within the SEPP.

HUAWEI ET AL, "New Annex for the SEPP in TR 33.926", vol. SA WG3, no. Sapporo (Japan); 20190624 - 20190628, (20190617), 3GPP DRAFT; S3-192180-UPDATE ANNEX IN 33.926 FOR SEPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg%5Fsa/WG3%5FSecurity/TSGS3%5F95Bis%5F Sapporo/Docs/S3%2D192180%2Ezip, (20190617), XP051753120 discloses a discussion of threats related to cryptographic material in the SEPP.

### SUMMARY

A method for mitigating 5G roaming spoofing attacks includes obtaining, by a security edge protection proxy (SEPP) and from a transport layer security (TLS) message from a first node, a first identifier for the first node. The method further includes obtaining, by the SEPP and from an N32-c security capability negotiation message from the first node, a second identifier for the first node. The method further includes comparing the first and second identifiers for the first node. The method further includes in response to determining that first and second identifiers do not match, determining that second identifier for the first node is invalid. The method further includes, in response to determining that the second identifier for the first node is invalid, blocking inter-public land mobile network (PLMN) communications with the first node. The method further includes in response to determining that the first and second identifiers match, performing a lookup in a peer SEPP database using one of the first and second identifiers for the first node. The method further includes in response to determining that the first and second identifiers for the first node match and that a matching identifier is present in the peer SEPP database, allowing inter-PLMN communications from the first node.

According to another aspect of the subject matter described herein, obtaining the first identifier for the first node from a TLS message includes obtaining the first identifier from a certificate contained a TLS certificate message.

According to another aspect of the subject matter described herein, the certificate comprises an X.509 certificate.

According to another aspect of the subject matter described herein, obtaining the first identifier for the first node includes extracting a fully qualified domain name (FQDN) for the first node from a subject alternative names extension of the X.509 certificate.

According to another aspect of the subject matter described herein, the SEPP is a responding SEPP in an N32-c security capability negotiation procedure and wherein obtaining the second identifier for the first node includes extracting the second identifier for the first node from a sender attribute of a SecNegotiateReqData information element of the N32-c security capability negotiation message.

According to another aspect of the subject matter described herein, the SEPP is an initiating SEPP in an N32-c security capability negotiation procedure and wherein obtaining the second identifier for the first node includes extracting the second identifier for the first node from a sender attribute of a SecNegotiationRspData information element of the N32-c security capability negotiation message.

According to another aspect of the subject matter described herein, the method for mitigating 5G roaming security attacks includes obtaining, by the SEPP and from a TLS handshake message from a second node, a first identifier for the second node, obtaining a second identifier for the second node from an N32-c security capability negotiation message from the second node, comparing the first and second identifiers for the second node, determining that first and second identifiers match, performing a lookup in a peer SEPP database using one of the first and second identifiers for the second node, locating a matching identifier in the peer SEPP database, and in response to determining that the first and second identifiers for the second node match and that a matching identifier is present in the peer SEPP database, allowing inter-PLMN communications with the second node.

According to another aspect of the subject matter described herein, the method for mitigating 5G roaming security attacks includes obtaining, by the SEPP and from a TLS handshake message from a second node, an first identifier for the second node, obtaining, by the SEPP and from an N32-c security capability negotiation message from the second node, a second identifier for the second node, comparing the first and second identifiers for the second node, determining that first and second identifiers match, performing a lookup in a peer SEPP database using one of the first and second identifiers for the second node and failing to locate a matching identifier in the peer SEPP database, and in response to determining that the first and second identifiers for the second node match and that a matching identifier is not present in the peer SEPP database, blocking inter-PLMN communications from the second node.

According to another aspect of the subject matter described herein, a system for mitigating 5G roaming spoofing attacks includes a security edge protection proxy (SEPP) including at least one processor and a memory. The system further includes a 5G roaming spoofing attack mitigation module implemented by the at least one processor and configured to obtain, from a transport layer security (TLS) message from a first node, a first identifier for the first node, obtain, from an N32-c security capability negotiation message from the first node, a second identifier for the first node, compare the first and second identifiers for the first node, in response to determining that first and second identifiers do not match, deteermining that second identifier for the first node is invalid, and, in response to determining that the second identifier for the first node is invalid, block inter-public land mobile network (PLMN) communications with the first node, in response to determining that the first and second identifiers match, performing a lookup in a peer SEPP database using one of the first and second identifiers for the first node, in response to determining that the first and second identifiers for the first node match and that a matching identifier is present in the peer SEPP database, allowing inter-PLMN communications from the first node..

According to another aspect of the subject matter described herein, the 5G roaming spoofing attack mitigation module is configured to obtain the first identifier for the first node from a certificate contained in a TLS certificate message.

According to another aspect of the subject matter described herein, the 5G roaming spoofing attack mitigation module is configured to obtain the first identifier for the first node by extracting a fully qualified domain name (FQDN) for the first node from a subject alternative names extension of the certificate.

According to another aspect of the subject matter described herein, the SEPP is a responding SEPP in an N32-c security capability negotiation procedure and wherein 5G roaming spoofing attack mitigation module is configured to obtain the second identifier for the first node by extracting the second identifier for the first node from a sender attribute of a SecNegotiateReqData information element of the N32-c security capability negotiation message.

According to another aspect of the subject matter described herein, the SEPP is an initiating SEPP in an N32-c security capability negotiation procedure and wherein the 5G roaming spoofing attack mitigation module is configured to obtain the second identifier for the first node by extracting the second identifier for the first node from a sender information element attribute of a SecNegotiateRspData information element of the N32-c security capability negotiation message.

According to another aspect of the subject matter described herein, the 5G roaming spoofing attack mitigation module is configured to obtain, from a TLS handshake message from a second node, a first identifier for the second node, obtain, from an N32-c security capability negotiation message from the second node, a second identifier for the second node, compare the first and second identifiers for the second node, determine that first and second identifiers match, perform a lookup in a peer SEPP database using one of the first and second identifiers for the second node, locating a matching identifier in the peer SEPP database, and, in response to determining that the first and second identifiers for the second node match and that a matching identifier is present in the peer SEPP database, allow inter-PLMN communications with the second node.

According to another aspect of the subject matter described herein, the 5G roaming spoofing attack mitigation module is configured to obtain, from a TLS handshake message from a second node, a first identifier for the second node, obtain, from an N32-c security capability negotiation message from the second node, a second identifier for the second node, compare the first and second identifiers for the second node, determine that first and second identifiers match, perform a lookup in a peer SEPP database using one of the first and second identifiers for the second node and fail to locate a matching identifier in the peer SEPP database, and, in response to determining that the first and second identifiers for the second node match and that a matching identifier is not present in the peer SEPP database, block inter-PLMN communications from the second node.

According to another aspect of the subject matter described herein, a non-transitory computer readable medium having stored thereon executable instructions that when executed by a processor of a computer control the computer to perform steps is provided. The steps include obtaining, by a security edge protection proxy (SEPP) and from a transport layer security (TLS) message from a first node, a first identifier for the first node. The steps further include obtaining, by the SEPP and from an N32-c security capability negotiation message from the first node, a second identifier for the first node. The steps further include comparing the first and second identifiers for the first node; in response to determining that first and second identifiers do not match, determining that second identifier for the first node is invalid. The steps further include, in response to determining that the second identifier for the first node is invalid, blocking inter-public land mobile network (PLMN) communications with the first node. The steps further include in response to determining that the first and second identifiers match, performing a lookup in a peer SEPP database using one of the first and second identifiers for the first node. The steps further include in response to determining that the first and second identifiers for the first node match and that a matching identifier is present in the peer SEPP database, allowing inter-PLMN communications from the first node.

The subject matter described herein may be implemented in hardware, software, firmware, or any combination thereof. As such, the terms "function" "node" or "module" as used herein refer to hardware, which may also include software and/or firmware components, for implementing the feature being described. In one exemplary implementation, the subject matter described herein may be implemented using a computer readable medium having stored thereon computer executable instructions that when executed by the processor of a computer control the computer to perform steps. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings of which:
Figure 1 is a network diagram illustrating an exemplary 5G network architecture;
Figure 2 is a message flow diagram illustrating the exchange of transport layer security (TLS) and N32-c messages between SEPPs;
Figure 3 is a network diagram illustrating a hacker impersonating an SEPP;
Figure 4 is a message flow diagram illustrating validation of identities presented in N32-c messages exchanged between SEPPs;
Figure 5 is a diagram illustrating the blocking of messages by a responding SEPP upon a validation failure on the N32-c interface;
Figure 6 is a diagram illustrating the blocking of messages by an initiating SEPP upon a validation failure on the N32-c interface;
Figure 7 is a block diagram illustrating an exemplary architecture of an SEPP for mitigating 5G roaming spoofing attacks; and
Figure 8 is a flow chart illustrating an exemplary method for mitigating 5G roaming spoofing attacks.

### DETAILED DESCRIPTION

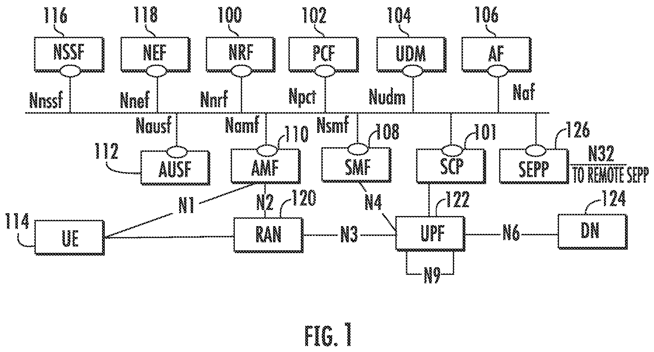

The subject matter described herein relates to methods, systems, and computer readable media for mitigating 5G roaming spoofing attacks. Figure 1 is a block diagram illustrating an exemplary 5G system network architecture. The architecture in Figure 1 includes NRF **100** and SCP **101,** which may be located in the same home public land mobile network (HPLMN). As described above, NRF **100** may maintain profiles of available producer NF service instances and their supported services and allow consumer NFs or SCPs to subscribe to and be notified of the registration of new/updated producer NF service instances. SCP 101 may also support service discovery and selection of producer NF instances. SCP 101 may perform load balancing of connections between consumer and producer NFs. In addition, using the methodologies described herein, SCP 101 may perform preferred NF location based selection and routing.

NRF **100** is a repository for NF or service profiles of producer NF instances. In order to communicate with a producer NF instance, a consumer NF or an SCP must obtain the NF or service profile or the producer NF instance from NRF 100. The NF or service profile is a JavaScript object notation (JSON) data structure defined in Third Generation Partnership Project (3GPP) Technical Specification (TS) 29.510. The NF or service profile definition includes at least one of a fully qualified domain name (FQDN), an Internet protocol (IP) version 4 (IPv4) address or an IP version 6 (IPv6) address. In Figure 1, any of the nodes (other than NRF 100) can be either consumer NFs or producer NFs, depending on whether they are requesting or providing services. In the illustrated example, the nodes include a policy control function (PCF) **102** that performs policy related operations in a network, a unified data management (UDM) function **104** that manages user data, and an application function (AF) **106** that provides application services. The nodes illustrated in Figure 1 further include a session management function (SMF) **108** that manages sessions between access and mobility management function (AMF) **110** and PCF 102. AMF **110** performs mobility management operations similar to those performed by a mobility management entity (MME) in 4G networks. An authentication server function (AUSF) **112** performs authentication services for user equipment (UEs), such as user equipment (UE) **114,** seeking access to the network.

A network slice selection function (NSSF) **116** provides network slicing services for devices seeking to access specific network capabilities and characteristics associated with a network slice. A network exposure function (NEF) **118** provides application programming interfaces (APIs) for application functions seeking to obtain information about Internet of things (IoT) devices and other UEs attached to the network. NEF **118** performs similar functions to the service capability exposure function (SCEF) in 4G networks.

A radio access network (RAN) **120** connects user equipment (UE) **114** to the network via a wireless link. Radio access network **120** may be accessed using a g-Node B (gNB) (not shown in Figure 1) or other wireless access point. A user plane function (UPF) **122** can support various proxy functionality for user plane services. One example of such proxy functionality is multipath transmission control protocol (MPTCP) proxy functionality. UPF **122** may also support performance measurement functionality, which may be used by UE **114** to obtain network performance measurements. Also illustrated in Figure 1 is a data network (DN) **124** through which UEs access data network services, such as Internet services.

SEPP **126** filters incoming traffic from another PLMN and performs topology hiding for traffic exiting the home PLMN. SEPP **126** may communicate with an SEPP in a foreign PLMN which manages security for the foreign PLMN. Thus, traffic between NFs in different PLMNs may traverse two SEPP functions, one for the home PLMN and the other for the foreign PLMN.

As stated above one problem with the existing 5G architecture is that the N32-c handshake does not validate remote endpoint identifications. In the absence of validation of endpoint identification, a malicious SEPP can try to spoof the identity of another SEPP and launch security attacks. The responding SEPP does not validate whether the N32-c handshake messages are received from a legitimate initiating SEPP. Similarly, the initiating SEPP does not validate whether the N32-c handshake message is sent to a legitimate responding SEPP. The subject matter described herein addresses these and other difficulties by cross-validating the N32-c identity of an SEPP with a TLS layer identity and with peer SEPP identities stored in a peer SEPP database maintained by initiating and responding SEPPs.

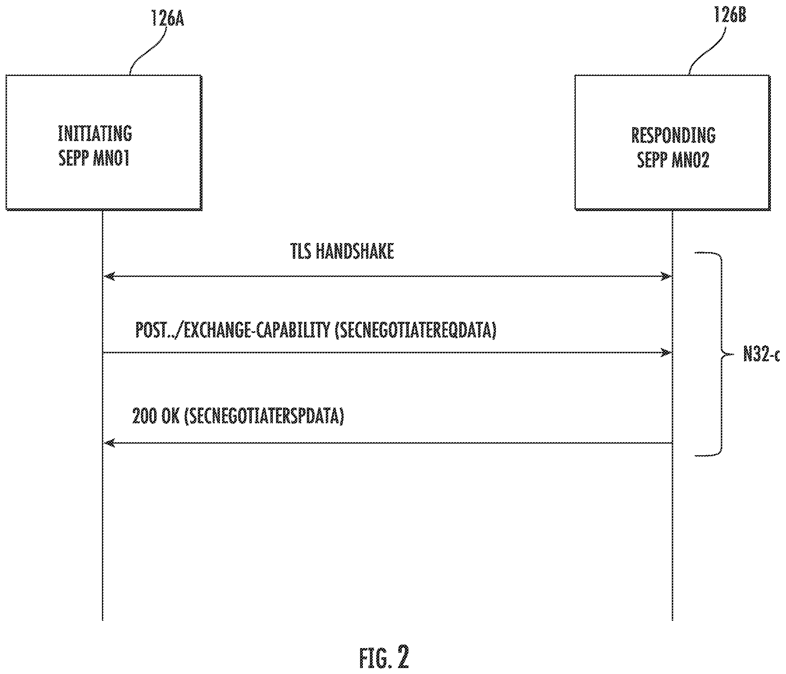

Figure 2 illustrates handshakes that occur between SEPPs on the N32 interface. In Figure 2, initiating SEPP **126A** and responding SEPP **126B** exchange TLS handshake messaging and N32-c security capability negotiation messaging over the N32 interface. The TLS handshake involves the exchange of certificates, which can be used to validate the identity of the sender at the TLS layer and are difficult to spoof. However, there is no cross-validation between the identities exchanged during the TLS handshake with the identities exchanged during the N32-c security capabilities negotiation messaging. As a result, both initiating SEPP **126A** and responding SEPP **126B** are vulnerable to roaming spoofing attacks. A roaming spoofing attack is an attack where an attacker masquerades as a node in a network in which a mobile subscriber is roaming. In the case of spoofing the identity of a node during the N32-c security capability negotiation procedure, the attacker spoofs the identity of an SEPP serving a network in which a subscriber is roaming.

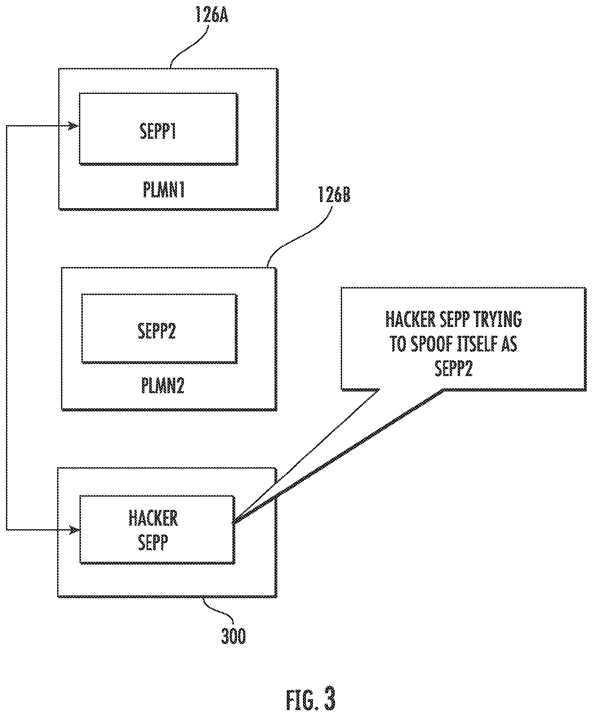

Figure 3 illustrates an example of a hacker SEPP **300** masquerading as a legitimate SEPP. In Figure 3, SEPP **126A** located in PLMN1 may believe that it is communicating with peer SEPP **126B** located in a PLMN2. However, hacker SEPP **300** may impersonate legitimate SEPP **126B** and establish N32-c communications with SEPP **126A.** Once such communications are established, hacker SEPP **300** may be able to obtain confidential subscriber information from PLMN1 and/or generate other types of attacks, such as denial of service attacks, on PLMN1.

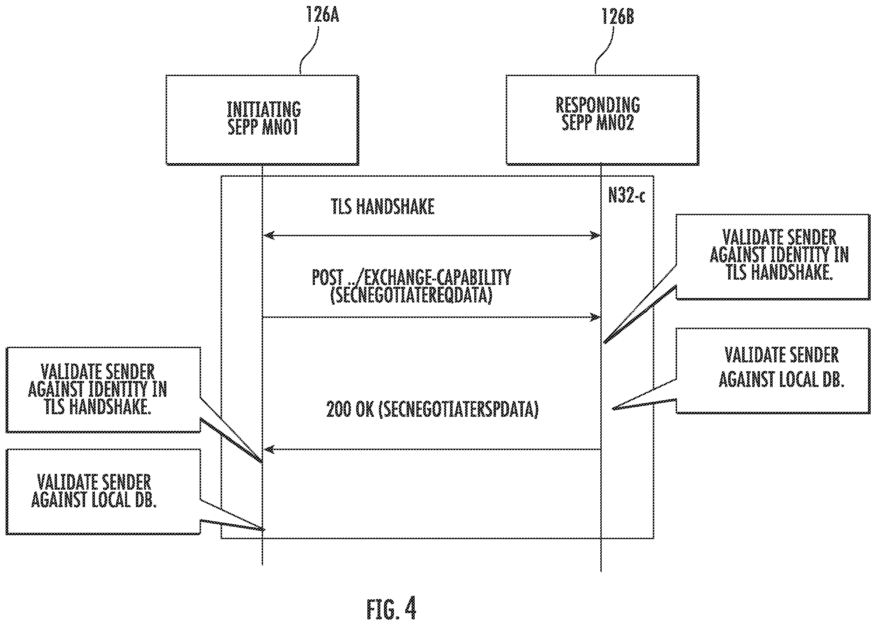

To avoid or reduce the likelihood of a successful spoofing attack on the N32-c interface, SEPPs **126A** and **126B** may cross-validate N32-c identities with TLS identities and may also validate the N32-c identities with peer SEPP identities using a configured peer SEPP database. Figure 4 illustrates exemplary cross validation that may be performed by initiating SEPP **126A** and responding SEPP **126B.** Referring to Figure 4, initiating SEPP **126A** and responding SEPP **126B** may exchange TLS handshake messages over the N32-c interface to establish a TLS connection. The TLS handshake involves the exchange of client and server hello messages followed by the exchange of certificate messages. The certificate messages contain the X.509 certificate of the sender. The identity of the sender is contained in the X.509 certificate and is difficult to spoof because the X.509 certificate is signed by a certificate authority.

Accordingly, in one example, the sender's identity extracted from the X.509 certificate may be used to cross validate the sender's N32-c identity. The TLS handshake protocol is defined in Internet Engineering Task Force (IETF) Request for Comments (RFC) 5246 and includes the exchange of certificate messages by both ends of the TLS connection. The structure of a TLS handshake message defined in IETF RFC 5246, including the certificate message, appears below:

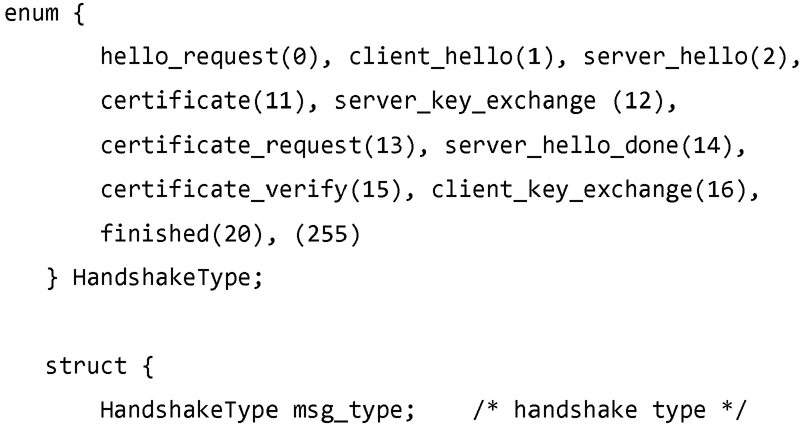

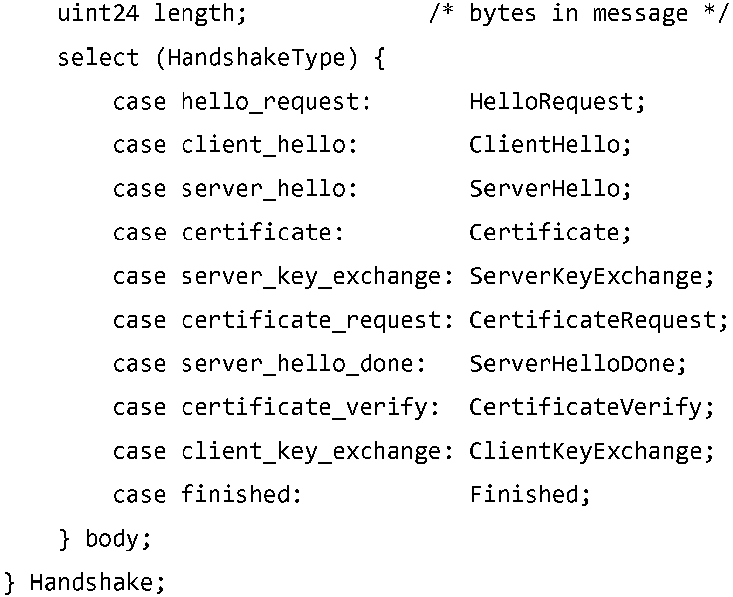

As illustrated by the TLS handshake message structure, one of the defined handshake message types is the certificate message, which contains the certificate of the client or server, depending on whether the sender is functioning as a client or a server. In establishing secure TLS communications over the N32-c interface, mutual TLS or m-TLS is used where both ends of the TLS connection receive and validate the other end's X.509 certificate. IETF RFC 5246 indicates that the type of certificate must be X.509v3 unless expressly negotiated otherwise. The examples described herein used the X.509v3 certificate as an example, but the subject matter described herein is not limited to only using the identity of the sender extracted from an X.509v3 to validate an N32-c identity of a sender. The X.509v3 certificate format is defined in IETF RFC 3280. According to IETF RFC 3280, one extension or parameter that may be included in an X.509v3 certificate is the subject alternative names extension. The subject alternative names extension is defined as follows:
The subject alternative names extension allows additional identities to be bound to the subject of the certificate. Defined options include an Internet electronic mail address, a DNS name, an IP address, and a uniform resource identifier (URI). Other options exist, including completely local definitions. Multiple name forms, and multiple instances of each name form, MAY be included. Whenever such identities are to be bound into a certificate, the subject alternative name (or issuer alternative name) extension MUST be used; however, a DNS name MAY be represented in the subject field using the domainComponent attribute as described in section 4.1.2.4. Because the subject alternative name is considered to be definitively bound to the public key, all parts of the subject alternative name MUST be verified by the CA.

As indicated above, the subject alternative names extension of the X.509v3 certificate may contain a DNS name, IP address, or a URI that identifies the subject of the certificate and that is verified by the certificate authority. Because the subject alternative name is verified by the certificate authority, the subject alternative name is difficult to spoof. However, simply ensuring that a sender has a valid X.509 certificate does not validate the identity of the sender at the N32-c application level. To perform such cross-validation, initiating SEPP **126A** and responding SEPP **126B** may extract identities from N32-c messages and compare these identities to the identities extracted from the X-509 certificate shared during the TLS handshake. If the identities match, SEPPs **126A** and **126B** may perform a further validation step of comparing the identity extracted from either the N32-c message or the TLS message with a database of configured peer SEPP identities. If either validation fails, the SEPP may block inter-PLMN communications with the remote node, identifying the remote node as an attacker.

Returning to Figure 4, after the TLS handshake messages are exchanged and a TLS connection is established between initiating SEPP **126A** and responding SEPP **126B,** initiating SEPP **126A** sends an HTTP POST message to responding SEPP **126B.** The HTTP POST message includes the SecNegotiateReqData information element, which includes the sender information element containing the FQDN of the sender. Responding SEPP **126B** receives the HTTP POST message, extracts the FQDN of the sender from the SecNegotiateReqData information element, and validates the FQDN against the identity of the sender obtained from the sender's X.509 certificate. In this case, it is assumed that the identities match. Accordingly, in the next step, responding SEPP **126B** performs a lookup for the sender's identity the peer SEPP database maintained by responding SEPP **126B.** It is assumed that the identity of initiating SEPP **126A** is present in the peer SEPP database of responding SEPP **126B,** so both validations pass from the perspective of responding SEPP **126B,** and, as a result, responding SEPP **126B** will allow inter-PLMN communications from initiating SEPP **126A.**

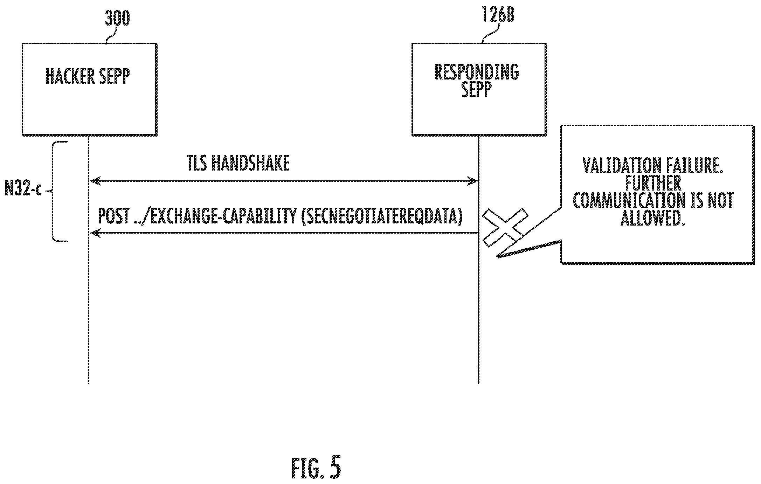

Continuing with the message flow in Figure 4, responding SEPP **126B** sends an HTTP 200 OK message to initiating SEPP **126A.** The HTTP 200 OK message includes the N32-c SecNegotiateRspData information element including the sender attribute. In Figure 5, the sender attribute carries the FQDN of responding SEPP **126B.** Initiating SEPP **126B** receives the HTTP 200 OK message, extracts the sender's FQDN from the sender attribute of the SecNegotiateRspData information element, and compares the FQDN with the FQDN for the sender extracted from the TLS certificate message. In this case, the FQDNs are assumed to match. Accordingly, initiating SEPP **126A** performs a further validation step of determining whether the identity of the sender is present in the peer SEPP database maintained by initiating SEPP **126A.** In this example, the identity of the sender is assumed to be present, and, as such, initiating SEPP **126A** allows inter-PLMN communications with responding SEPP **126B.**

Figure 5 illustrates the case where hacker SEPP **300** is the initiating SEPP with respect to the N32-c security capability negotiation procedure. In Figure 5, hacker SEPP **300** initiates a TLS handshake with responding SEPP **126B.** Responding SEPP **126B** extracts the X.509 certificate from a TLS handshake message and extracts an identity presented by hacker SEPP **300** in the certificate. Hacker SEPP **300** communicates an identity to responding SEPP **126B** in an N32-c SecNegotiateReqData information element of N32-c security capability negotiation message, which in the illustrated example is an HTTP POST message. Responding SEPP **126B** extracts the identity presented by hacker SEPP **300** in the N32-c SecNegotiateReqData information element of the N32-c security capability negotiation message and compares the identity extracted from the SecNegotiateReqData information element of the N32-c security capability negotiation message with the identity extracted from the certificate obtained from the TLS message. In this case, the identities do not match. As a result, responding SEPP **126B** determines that a validation failure has occurred. Accordingly, responding SEPP **126B** blocks further communications from hacker SEPP **300.**

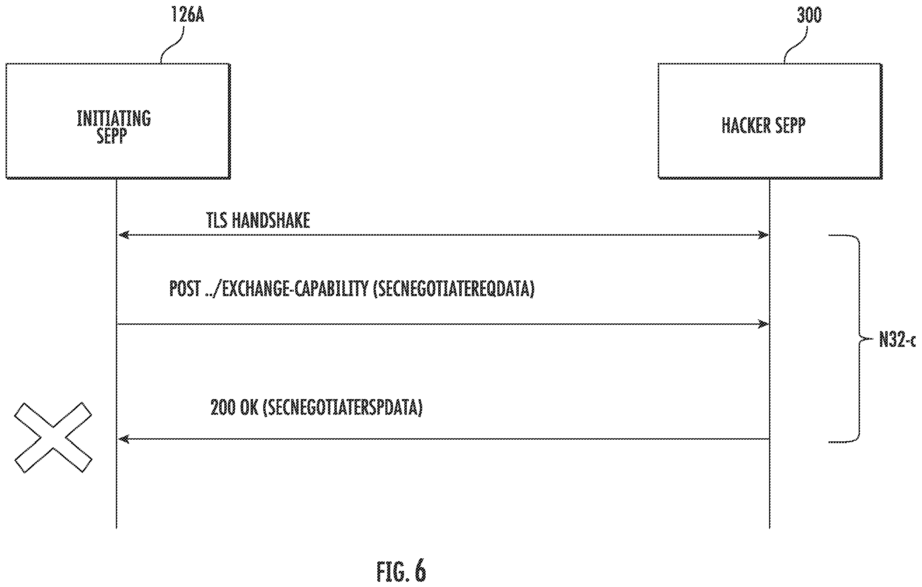

Figure 6 illustrates the case where the SEPP performing the TLS and N32-c identity cross validation is the initiating SEPP in the N32-c security capability negotiation transaction. In Figure 6, initiating SEPP receives TLS and N32-c messages from hacker SEPP **300.** Initiating SEPP **126A** obtains the X.509 certificate from one of the TLS handshake messages. Initiating SEPP **126A** extracts the identity from the X.509 certificate and compares the identity to an identity received from hacker SEPP **300** in the SecNegotiateRspData information element of the N32-c security capability negotiation message, which in the illustrated example, is an HTTP 200 OK message. In this case, the identities do not match. Accordingly, initiating SEPP **126A** blocks further communications from hacker SEPP **300.**

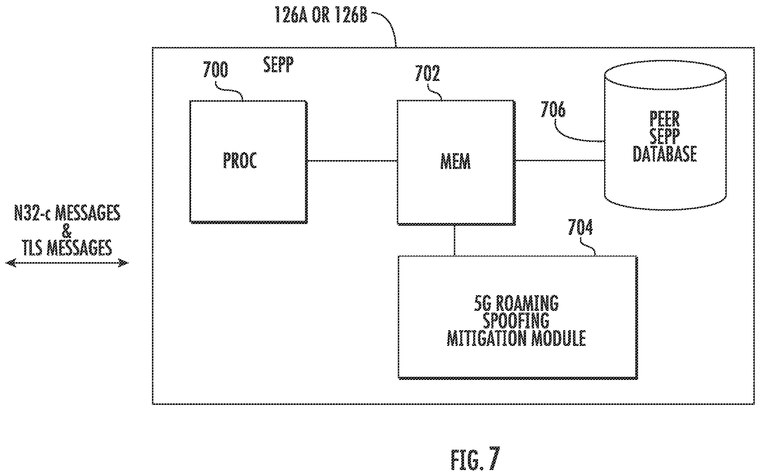

Figure 7 is a block diagram illustrating an exemplary architecture for SEPP **126A** or **126B.** SEPP **126A or 126B** includes at least one processor **700** and a memory **702.** SEPP **126A or 126B** further includes a 5G roaming spoofing mitigation module **704** that performs these steps described herein for cross-validating identities in N32-c messages with identities extracted from TLS messages. SEPP **126A** or **126B** further includes a peer SEP database **706** that is configured with identities of peer SEPPs with which inter-PLMN communications are allowed. 5G roaming spoofing mitigation module **704** may be implemented by processor **700** and may also perform the cross check of the N32-c identity presented by a remote node against the peer SEPP identities stored in database **706.** If the identity of a remote node presented in an N32-c security capability negotiation message is not present in database **706** or if the cross check with the TLS identity fails, 5G roaming spoofing mitigation module **704** may block inter-PLMN communications with the remote node. If both identity cross checks pass, 5G roaming spoofing mitigation module **704** may allow inter-PLMN communications with the remote node.

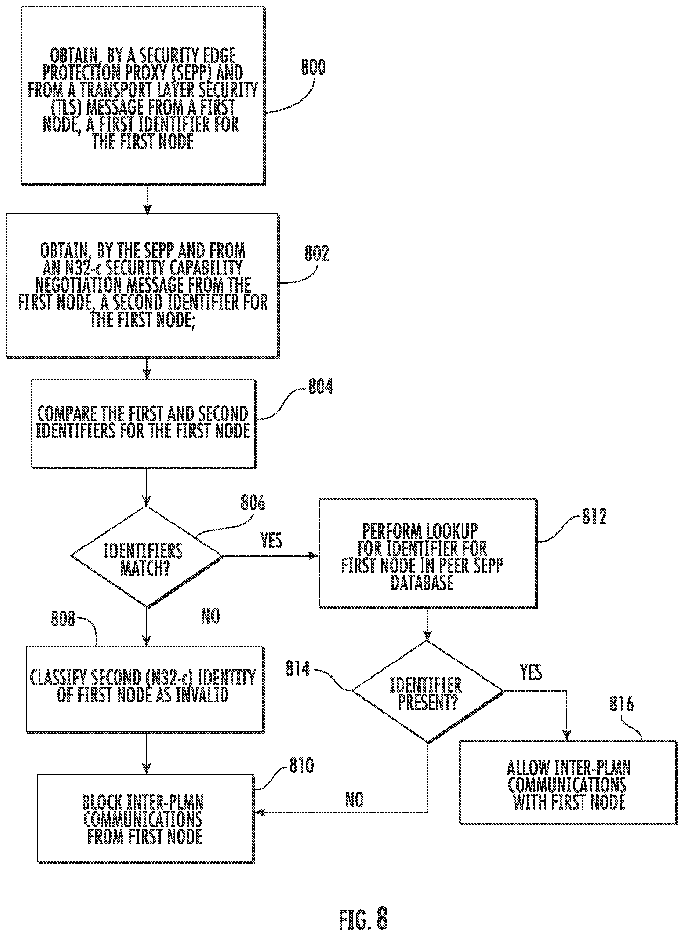

Figure 8 is a flow chart illustrating an exemplary method for mitigating 5G speaking attacks. Referring to Figure 8, in step **800,** the SEPP obtains a first identifier from a TLS message from a first node. For example, an initiating or responding SEPP **126A** or **126B** may extract an identity for a sending node from an alternative ID field of a X.509 certificate in a TLS message received from a sending node. The TLS message may be a certificate message exchanged with a remote node as part of the TLS handshake procedure used to establish the TLS connection with the remote node.

In step **802,** the SEPP obtains, from an N32-c security capability negotiation message from the first node, a second identifier for the first node. For example, if the SEPP is an initiating SEPP for purposes of the N32-c security capability negotiation transaction, the initiating SEPP may extract the N32c identity from the sender ID attribute of an N32-c SecNegotiateRspData information element of the HTTP 200 OK message from the remote node. If the SEPP is a responding SEPP for purposes of the N32-c security capability negotiation transaction, the responding SEPP may extract the N32c identity from the sender ID attribute of an N32-c SecNegotiateReqData information element of an HTTP POST message from the remote node. Tables 1 and 2 shown below correspond to tables 6.1.5.2.2.1 and 6.5.1.2.2 of 3GPP TS 29.573, which illustrate the attributes that may be included in the SecNegotiateReqData and SecNegotiateRspData information elements that are part of the N32-c security capability negotiation.

**Table 1: Definition of type SecNegotiateReqData**

| **Attribute name** | **Data type** | **P** | **Cardinality** | **Description** |
|---|---|---|---|---|
| sender | Fqdn | M | 1 | This IE shall uniquely identify the SEPP that is sending the request. This IE is used to store the negotiated security capability against the right SEPP. |
| supportedSecC apabilityList | array(SecurityCa pability) | M | 1..N | This IE shall contain the list of security capabilities that the requesting SEPP supports. |

**Table 2: Definition of type SecNegotiateRspData**

| **Attribute name** | **Data type** | **P** | **Cardinality** | **Description** |
|---|---|---|---|---|
| sender | Fqdn | M | 1 | This IE shall uniquely identify the SEPP that is sending the response. This IE is used to store the negotiated security capability against the right SEPP. |
| selectedSecCa pability | SecurityCapabilit y | M | 1 | This IE shall contain the security capability selected by the responding SEPP. |

As can be seen from Tables 1 and 2, sender attribute is a mandatory parameter of both the SecNegotiateReqData and SecNegotiateRspData information elements and contains the FQDN of the SEPP that sends the request or response. It is this FQDN that can be cross validated with the TLS layer identity.

In step **804,** the SEPP compares the first and second identifiers for the first node. For example, the SEPP may compare the TLS identifier extracted from the X.509 certificate with the N32-c identifier extracted from the SecNegotiateRspData or SecNegotiateReqData information element of the N32-c security capability negotiation message.

In step **806,** if the identifiers do not match, control proceeds to step **808** where the SEPP classifies the second (N32-c) identity of the first node as invalid. Control then proceeds to step **810,** where the SEPP blocks inter-PLMN communications from the first node.

Returning to step **806,** if the TLS and N32-c application layer identities match, control proceeds to step **812** where the SEPP performs a lookup for the identity for the first node in the peer SEPP database. Since the identities from the TLS layer and the N32c (application) layer match in step **806,** the lookup may be performed using either the TLS layer or N32-c layer identity. The peer SEPP database may be provisioned by the network operator with the identities of SEPPs with which a give SEPP in the operator's network is permitted to communicate. Such SEPPs are referred to herein as peer SEPPs because they may be associated with PLMNs of peer network operators.

In step **814,** if the identity is present in the peer SEPP database, control proceeds to step **816** where the SEPP allows inter-PLMN communications with the first node. If the identity is not present in the database, control proceeds to step **810** where the SEPP blocks inter-PLMN communications with the first node.

The subject matter described herein improves network security between SEPPs and PLMNs by performing cross-validation of identities exchanged between SEPPs in different network protocol layers. By comparing an N32-c identity with a TLS layer identity that is difficult to spoof, the SEPPs described herein reduce the likelihood of a successful spoofing attack during the N32-c security capability exchange procedure. In addition, because the cross-validation steps described herein can be both the initiating and responding SEPP in an N32 security capability negotiation, the likelihood of an attacker successfully impersonating either end of an N32-c connection is reduced.

### References

1. IETF RFC 5246; The Transport Layer Security (TLS) Protocol, Version 1.2; August 2008
2. IETF RFC 3280; Internet X.509 Public Key Infrastructure Certificate and Certificate Revocation List (CRL) Profile, April 2002.
3. 3GPP TS 29.573; 3rd Generation Partnership Project; Technical Specification Group Core Network and Terminals; 5G System; Public Land Mobile Network (PLMN) Interconnection; Stage 3 (Release 16) V16.3.0 (2020-07)
4. 3GPP TS 33.501; 3rd Generation Partnership Project; Technical Specification Group Services and System Aspects; Security Architecture and Procedures for the 5G System; (Release 16), V16.3.0 (2020-07).
5. 3GPP TS 29.510; 3rd Generation Partnership Project; Technical Specification Group Core Network and Terminals; 5G System; Network Function Repository Services; Stage 3 (Release 16), V16.4.0 (2020-07).

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A method for mitigating 5G roaming spoofing attacks, the method comprising:
obtaining (800), by a security edge protection proxy, SEPP, and from a transport layer security, TLS, message from a first node, a first identifier for the first node;
obtaining (802), by the SEPP and from an N32-c security capability negotiation message from the first node, a second identifier for the first node;
comparing (804) the first and second identifiers for the first node;
in response to determining that first and second identifiers do not match (806), determining that second identifier for the first node is invalid (808), and, in response to determining that the second identifier for the first node is invalid, blocking (810) inter-public land mobile network, PLMN, communications with the first node;
**characterized in that** the method further comprises, in response to determining that the first and second identifiers match (806), performing a lookup (812) in a peer SEPP database using one of the first and second identifiers for the first node; and
in response to determining that the first and second identifiers for the first node match (806) and that a matching identifier is present in the peer SEPP database (814), allowing (816) inter-PLMN communications from the first node.

2. The method of claim 1 wherein obtaining (800) the first identifier for the first node from a TLS message includes obtaining the first identifier from an X.509 certificate contained in a TLS certificate message.

3. The method of claim 2 wherein obtaining (800) the first identifier for the first node includes extracting a fully qualified domain name, FQDN, for the first node from a subject alternative names extension of the X.509 certificate.

4. The method of any preceding claim wherein the SEPP is a responding SEPP in an N32-c security capability negotiation procedure and wherein obtaining (802) the second identifier for the first node includes extracting the second identifier for the first node from a sender attribute of a SecNegotiateReqData information element of the N32-c security capability negotiation message.

5. The method of any one of claims 1 to 3 wherein the SEPP is an initiating SEPP in an N32-c security capability negotiation procedure and wherein obtaining (802) the second identifier for the first node includes extracting the second identifier for the first node from a sender attribute of a SecNegotiationRspData information element of the N32-c security capability negotiation message.

6. The method of any preceding claim comprising, in response to determining that the first and second identifiers for the first node match (806) and that a matching identifier is not present in the peer SEPP database (814), blocking (810) inter-PLMN communications from the first node.

7. A system for mitigating 5G roaming spoofing attacks, the system comprising:
a security edge protection proxy, SEPP (126), including at least one processor and a memory; and
a 5G roaming spoofing attack mitigation module implemented by the at least one processor and configured to:
obtain (800), from a transport layer security, TLS, message from a first node, a first identifier for the first node;
obtain (802), from an N32-c security capability negotiation message from the first node, a second identifier for the first node;
compare (804) the first and second identifiers for the first node;
in response to determining that first and second identifiers do not match (806), determining that second identifier for the first node is invalid (808), and, in response to determining that the second identifier for the first node is invalid, block (810) inter-public land mobile network, PLMN, communications with the first node;
**characterized in that** the 5G roaming spoofing attack mitigation module is further configured to, in response to determining that the first and second identifiers match (806), perform a lookup (812) in a peer SEPP database using one of the first and second identifiers for the first node; and
in response to determining that the first and second identifiers for the first node match (806) and that a matching identifier is present in the peer SEPP database (814), allow (816) inter-PLMN communications from the first node.

8. The system of claim 7 wherein the 5G roaming spoofing attack mitigation module is configured to obtain (800) the first identifier for the first node from an X.509 certificate contained in a TLS certificate message.

9. The system of claim 8 wherein the 5G roaming spoofing attack mitigation module is configured to obtain (800) the first identifier for the first node by extracting a fully qualified domain name, FQDN, for the first node extracted from a subject alternative names extension of the X.509 certificate.

10. The system of any one of claims 7 to 9 wherein the SEPP (126) is a responding SEPP in an N32-c security capability negotiation procedure and wherein 5G roaming spoofing attack mitigation module is configured to obtain (802) the second identifier for the first node by extracting the second identifier for the first node from a sender attribute of a SecNegotiateReqData information element of the N32-c security capability negotiation message.

11. The system of any one of claims 7 to 9 wherein the SEPP (126) is an initiating SEPP in an N32-c security capability negotiation procedure and wherein the 5G roaming spoofing attack mitigation module is configured to obtain (802) the second identifier for the first node by extracting the second identifier for the first node from a sender information element attribute of a SecNegotiateRspData information element of the N32-c security capability negotiation message.

12. The system of any one of claims 7 to 11 wherein the 5G roaming spoofing attack mitigation module is configured to, in response to determining that the first and second identifiers for the first node match (806) and that a matching identifier is not present in the peer SEPP database (814), block (810) inter-PLMN communications from the first node.

13. A non-transitory computer readable medium having stored thereon executable instructions that when executed by a processor of a computer control the computer to perform steps comprising:
obtaining (800), by a security edge protection proxy, SEPP, and from a transport layer security, TLS, message from a first node, a first identifier for the first node;
obtaining (802), by the SEPP and from an N32-c security capability negotiation message from the first node, a second identifier for the first node;
comparing (804) the first and second identifiers for the first node;
in response to determining that first and second identifiers do not match (806), determining that second identifier for the first node is invalid (808), and, in response to determining that the second identifier for the first node is invalid, blocking (810) inter-public land mobile network, PLMN, communications with the first node;
**characterized in that** the steps further comprise, in response to determining that the first and second identifiers match (806), performing (812) a lookup in a peer SEPP database using one of the first and second identifiers for the first node; and
in response to determining that the first and second identifiers for the first node match (806) and that a matching identifier is present in the peer SEPP database (814), allowing (816) inter-PLMN communications from the first node.

14. The non-transitory computer readable medium of claim 13 wherein obtaining (800) the first identifier for the first node from a TLS message includes obtaining the first identifier from an X.509 certificate contained in a TLS certificate message.

15. The non-transitory computer readable medium of claim 14 wherein obtaining (800) the first identifier for the first node includes extracting a fully qualified domain name, FQDN, for the first node from a subject alternative names extension of the X.509 certificate.

## Patentansprüche

1. Verfahren zum Abmildern von 5G-Roaming-Spoofing-Angriffen, wobei das Verfahren Folgendes umfasst:
Erhalten (800) durch einen Sicherheitsrandschutz-Proxy (Security Edge Protection Proxy, SEPP) und aus einer Transportschicht-Sicherheitsnachricht (Transport Layer Security, TLS) von einem ersten Knoten, einer ersten Kennung für den ersten Knoten;
Erhalten (802), durch den SEPP und aus einer N32-c-Sicherheitsfähigkeitsaushandlungsnachricht vom ersten Knoten, einer zweiten Kennung für den ersten Knoten ;
Vergleichen (804) der ersten und zweiten Kennung für den ersten Knoten;
als Reaktion auf das Bestimmen, dass die erste und die zweite Kennung nicht übereinstimmen (806), Bestimmen, dass die zweite Kennung für den ersten Knoten ungültig ist (808), und als Reaktion auf das Bestimmen, dass die zweite Kennung für den ersten Knoten ungültig ist, Blockieren (810) der Kommunikation zwischen öffentlichen Landmobilfunknetzwerken (Public Land Mobile Network, PLMN) mit dem ersten Knoten;
**dadurch gekennzeichnet, dass** das Verfahren ferner umfasst:
als Reaktion darauf, dass bestimmt wird, dass die erste und die zweite Kennung übereinstimmen (806), Durchführen einer Suche (812) in einer Peer-SEPP-Datenbank unter Verwendung einer der ersten und zweiten Kennungen für den ersten Knoten; und
als Reaktion darauf, dass bestimmt wird, dass die erste und die zweite Kennung für den ersten Knoten übereinstimmen (806) und dass eine übereinstimmende Kennung in der Peer-SEPP-Datenbank vorhanden ist (814), Zulassen (816) von PLMN-Kommunikation zwischen dem ersten Knoten.

2. Verfahren nach Anspruch 1, wobei das Erhalten (800) der ersten Kennung für den ersten Knoten aus einer TLS-Nachricht das Erhalten der ersten Kennung aus einem X.509-Zertifikat enthält, das in einer TLS-Zertifikatsnachricht enthalten ist.

3. Verfahren nach Anspruch 2, wobei das Erhalten (800) der ersten Kennung für den ersten Knoten das Extrahieren eines vollqualifizierten Domänennamens (FQDN) für den ersten Knoten aus einer Subjektalternativnamenserweiterung des X.509-Zertifikats enthält.

4. Verfahren nach einem der vorhergehenden Ansprüche, wobei der SEPP ein antwortender SEPP in einem N32-c-Sicherheitsfähigkeitsaushandlungsverfahren ist und wobei das Erhalten (802) der zweiten Kennung für den ersten Knoten das Extrahieren der zweiten Kennung für den ersten Knoten aus einem Absenderattribut eines SecNegotiateReqData-Informationselements der N32-c-Sicherheitsfähigkeitsaushandlungsnachricht enthält.

5. Verfahren nach einem der Ansprüche 1 bis 3, wobei der SEPP ein initiierender SEPP in einem N32-c-Sicherheitsfähigkeitsaushandlungsverfahren ist und wobei das Erhalten (802) der zweiten Kennung für den ersten Knoten das Extrahieren der zweiten Kennung für den ersten Knoten aus einem Absenderattribut eines SecNegotiationRspData-Informationselements der N32-c-Sicherheitsfähigkeitsaushandlungsnachricht enthält.

6. Verfahren nach einem der vorhergehenden Ansprüche, das Folgendes umfasst: als Reaktion darauf, dass bestimmt wird, dass die erste und die zweite Kennung für den ersten Knoten übereinstimmen (806) und dass eine übereinstimmende Kennung in der Peer-SEPP-Datenbank nicht vorhanden ist (814), Blockieren (810) von PLMN-Kommunikation zwischen dem ersten Knoten.

7. System zum Abmildern von 5G-Roaming-Spoofing-Angriffen, wobei das System umfasst:
einen Sicherheitsrandschutz-Proxy, SEPP (126), der mindestens einen Prozessor und einen Speicher enthält; und
ein Modul zur Abwehr von 5G-Roaming-Spoofing-Angriffen, das durch den mindestens einen Prozessor implementiert und für Folgendes konfiguriert ist:
Erhalten (800), aus einer Transport Layer Security (TLS)-Nachricht von einem ersten Knoten, einer ersten Kennung für den ersten Knoten;
Erhalten (802), aus einer N32-c-Sicherheitsfähigkeitsaushandlungsnachricht vom ersten Knoten, einer zweiten Kennung für den ersten Knoten;
Vergleichen (804) der ersten und zweiten Kennung für den ersten Knoten; als Reaktion auf das Bestimmen, dass die erste und zweite Kennung nicht übereinstimmen (806), Bestimmen, dass die zweite Kennung für den ersten Knoten ungültig ist (808), und als Reaktion auf das Bestimmen, dass die zweite Kennung für den ersten Knoten ungültig ist, Blockieren (810) der Kommunikation zwischen öffentlichen Landmobilfunknetzwerken (PLMN) mit dem ersten Knoten;
**dadurch gekennzeichnet, dass** das 5G-Roaming-Spoofing-Angriffs-Abwehrmodul ferner für Folgendes konfiguriert ist:
als Reaktion darauf, dass bestimmt wird, dass die erste und die zweite Kennung übereinstimmen (806), Durchführen einer Suche (812) in einer Peer-SEPP-Datenbank unter Verwendung einer der ersten und zweiten Kennungen für den ersten Knoten; und
als Reaktion darauf, dass bestimmt wird, dass die erste und die zweite Kennung für den ersten Knoten übereinstimmen (806) und dass eine übereinstimmende Kennung in der Peer-SEPP-Datenbank vorhanden ist (814), Zulassen (816) von PLMN-Kommunikation zwischen dem ersten Knoten.

8. System nach Anspruch 7, wobei das Modul zur Abwehr von 5G-Roaming-Spoofing-Angriffen so konfiguriert ist, dass es die erste Kennung für den ersten Knoten aus einem X.509-Zertifikat erhält (800), das in einer TLS-Zertifikatsnachricht enthalten ist.

9. System nach Anspruch 8, wobei das Modul zur Abwehr von 5G-Roaming-Spoofing-Angriffen so konfiguriert ist, dass es die erste Kennung für den ersten Knoten erhält (800), indem es einen vollqualifizierten Domänennamen (FQDN) für den ersten Knoten extrahiert, der aus einer Erweiterung für alternative Namen des X.509-Zertifikats extrahiert wurde.

10. System nach einem der Ansprüche 7 bis 9, wobei der SEPP (126) ein antwortender SEPP in einem N32-c-Sicherheitsfähigkeitsaushandlungsverfahren ist und wobei das Modul zur Abwehr von 5G-Roaming-Spoofing-Angriffen so konfiguriert ist, dass es die zweite Kennung für den ersten Knoten erhält (802) durch Extrahieren der zweiten Kennung für den ersten Knoten aus einem Absenderattribut eines SecNegotiateReqData-Informationselements der N32-c-Sicherheitsfähigkeitsaushandlungsnachricht.

11. System nach einem der Ansprüche 7 bis 9, wobei der SEPP (126) ein initiierender SEPP in einem N32-c-Sicherheitsfähigkeitsaushandlungsverfahren ist und wobei das Modul zur Abwehr von 5G-Roaming-Spoofing-Angriffen so konfiguriert ist, dass es die zweite Kennung für den ersten Knoten erhält (802) durch Extrahieren der zweiten Kennung für den ersten Knoten aus einem Absenderinformationselementattribut eines SecNegotiateRspData-Informationselements der N32-c-Sicherheitsfähigkeitsaushandlungsnachricht.

12. System nach einem der Ansprüche 7 bis 11, wobei das Modul zur Abschwächung von 5G-Roaming-Spoofing-Angriffen so konfiguriert ist, dass es als Reaktion darauf, dass bestimmt wird, dass die erste und die zweite Kennung für den ersten Knoten übereinstimmen (806) und dass keine übereinstimmende Kennung in der Peer-SEPP-Datenbank vorhanden ist (814), die Kommunikation zwischen PLMNs vom ersten Knoten blockiert (810).

13. Nicht-flüchtiges computerlesbares Medium, auf dem ausführbare Anweisungen gespeichert sind, die, wenn sie von einem Prozessor eines Computers ausgeführt werden, den Computer so steuern, dass er Schritte ausführt, die Folgendes umfassen:
Erhalten (800) durch einen Sicherheitsrandschutz-Proxy, SEPP, und aus einer Transportschicht-Sicherheitsnachricht, TLS, von einem ersten Knoten, einer ersten Kennung für den ersten Knoten;
Erhalten (802), durch den SEPP und aus einer N32-c-Sicherheitsfähigkeitsaushandlungsnachricht vom ersten Knoten, einer zweiten Kennung für den ersten Knoten ;
Vergleichen (804) der ersten und zweiten Kennung für den ersten Knoten;
als Reaktion auf das Bestimmen, dass die erste und die zweite Kennung nicht übereinstimmen (806), Bestimmen, dass die zweite Kennung für den ersten Knoten ungültig ist (808), und als Reaktion auf das Bestimmen, dass die zweite Kennung für den ersten Knoten ungültig ist, Blockieren (810) der Kommunikation zwischen öffentlichen Landmobilfunknetzwerken, PLMN, mit dem ersten Knoten;
**dadurch gekennzeichnet, dass** die Schritte ferner Folgendes umfassen:
als Reaktion darauf, dass bestimmt wird, dass die erste und die zweite Kennung übereinstimmen (806), Durchführen (812) einer Suche in einer Peer-SEPP-Datenbank unter Verwendung einer der ersten und zweiten Kennungen für den ersten Knoten; und
als Reaktion darauf, dass bestimmt wird, dass die erste und die zweite Kennung für den ersten Knoten übereinstimmen (806) und dass eine übereinstimmende Kennung in der Peer-SEPP-Datenbank vorhanden ist (814), Zulassen (816) von PLMN-Kommunikation zwischen dem ersten Knoten.

14. Nicht-flüchtiges computerlesbares Medium nach Anspruch 13, wobei das Erhalten (800) der ersten Kennung für den ersten Knoten aus einer TLS-Nachricht das Erhalten der ersten Kennung aus einem X.509-Zertifikat enthält, das in einer TLS-Zertifikatsnachricht enthalten ist.

15. Nicht-flüchtiges computerlesbares Medium nach Anspruch 14, wobei das Erhalten (800) der ersten Kennung für den ersten Knoten das Extrahieren eines vollqualifizierten Domänennamens (FQDN) für den ersten Knoten aus einer Subjektalternativnamenserweiterung des X.509-Zertifikats enthält.

## Revendications

1. Procédé permettant d'atténuer les attaques par mystification en itinérance 5G, le procédé comportant les étapes consistant à :
obtenir (800), par un mandataire SEPP (security edge protection proxy - mandataire de protection de bord de sécurité), et en provenance d'un message TLS (transport layer security - sécurité de couche de transport) en provenance d'un premier nœud, un premier identificateur pour le premier nœud ;
obtenir (802), par le mandataire SEPP et en provenance d'un message de négociation de capacité de sécurité N32-c en provenance du premier nœud, un deuxième identificateur pour le premier nœud ;
comparer (804) les premier et deuxième identificateurs pour le premier nœud ;
en réponse à la détermination comme quoi les premier et deuxième identificateurs ne se correspondent pas l'un par rapport à l'autre (806), déterminer comme quoi le deuxième identificateur pour le premier nœud est invalide (808), et, en réponse à la détermination comme quoi le deuxième identificateur pour le premier nœud est invalide, bloquer (810) les communications inter-réseau PLMN (public land mobile network - réseau mobile terrestre public), avec le premier nœud ;
**caractérisé en ce que** le procédé comporte par ailleurs les étapes consistant à,
en réponse à la détermination comme quoi les premier et deuxième identificateurs se correspondent l'un par rapport à l'autre (806), effectuer une consultation (812) dans une base de données de mandataires SEPP homologues en utilisant l'un des premier et deuxième identificateurs pour le premier nœud ; et
en réponse à la détermination comme quoi les premier et deuxième identificateurs pour le premier nœud se correspondent l'un par rapport à l'autre (806) et comme quoi un identificateur correspondant est présent dans la base de données de mandataires SEPP homologues (814), permettre (816) les communications inter-réseau PLMN en provenance du premier nœud.

2. Procédé selon la revendication 1, dans lequel l'étape consistant à obtenir (800) le premier identificateur pour le premier nœud en provenance d'un message TLS comprend l'étape consistant à obtenir le premier identificateur en provenance d'un certificat X.509 contenu dans un message de certificat TLS.

3. Procédé selon la revendication 2, dans lequel l'étape consistant à obtenir (800) le premier identificateur pour le premier nœud comprend l'étape consistant à extraire un nom FQDN (fully qualified domain name - nom de domaine complet) pour le premier nœud en provenance d'une extension de noms alternatifs de sujet du certificat X.509.

4. Procédé selon l'une quelconque des revendications précédentes, dans lequel le mandataire SEPP est un mandataire SEPP répondant dans une procédure de négociation de capacité de sécurité N32-c et dans lequel l'étape consistant à obtenir (802) le deuxième identificateur pour le premier nœud comprend l'étape consistant à extraire le deuxième identificateur pour le premier nœud en provenance d'un attribut d'expéditeur d'un élément d'information SecNegotiateReqData du message de négociation de capacité de sécurité N32-c.

5. Procédé selon l'une quelconque des revendications 1 à 3, dans lequel le mandataire SEPP est un mandataire SEPP initiateur dans une procédure de négociation de capacité de sécurité N32-c et dans lequel l'étape consistant à obtenir (802) le deuxième identificateur pour le premier nœud comprend l'étape consistant à extraire le deuxième identificateur pour le premier nœud en provenance d'un attribut d'expéditeur d'un élément d'information SecNegotiationRspData du message de négociation de capacité de sécurité N32-c.

6. Procédé selon l'une quelconque des revendications précédentes, comportant, en réponse à la détermination comme quoi les premier et deuxième identificateurs pour le premier nœud se correspondent l'un par rapport à l'autre (806) et comme quoi un identificateur correspondant n'est pas présent dans la base de données de mandataires SEPP homologues (814), l'étape consistant à bloquer (810) les communications inter-réseau PLMN en provenance du premier nœud.

7. Système permettant d'atténuer les attaques par mystification en itinérance 5G, le système comportant :
un mandataire SEPP (security edge protection proxy - mandataire de protection de bord de sécurité) (126) comprenant au moins un processeur et une mémoire ; et
un module d'atténuation des attaques par mystification en itinérance 5G mis en œuvre par ledit au moins un processeur et configuré pour :
obtenir (800), en provenance d'un message TLS (transport layer security - sécurité de couche de transport) en provenance d'un premier nœud, un premier identificateur pour le premier nœud ;
obtenir (802), en provenance d'un message de négociation de capacité de sécurité N32-c en provenance du premier nœud, un deuxième identificateur pour le premier nœud ;
comparer (804) les premier et deuxième identificateurs pour le premier nœud ;
en réponse à la détermination comme quoi les premier et deuxième identificateurs ne se correspondent pas l'un par rapport à l'autre (806), déterminer comme quoi le deuxième identificateur pour le premier nœud est invalide (808), et,
en réponse à la détermination comme quoi le deuxième identificateur pour le premier nœud est invalide, bloquer (810) les communications inter-réseau PLMN (public land mobile network - réseau mobile terrestre public), avec le premier nœud ;
**caractérisé en ce que** le module d'atténuation des attaques par mystification en itinérance 5G est par ailleurs configuré pour,
en réponse à la détermination comme quoi les premier et deuxième identificateurs se correspondent l'un par rapport à l'autre (806), effectuer une consultation (812) dans une base de données de mandataires SEPP homologues en utilisant l'un des premier et deuxième identificateurs pour le premier nœud ; et
en réponse à la détermination comme quoi les premier et deuxième identificateurs pour le premier nœud se correspondent l'un par rapport à l'autre (806) et comme quoi un identificateur correspondant est présent dans la base de données de mandataires SEPP homologues (814), permettre (816) les communications inter-réseau PLMN en provenance du premier nœud.

8. Système selon la revendication 7, dans lequel le module d'atténuation des attaques par mystification en itinérance 5G est configuré pour obtenir (800) le premier identificateur pour le premier nœud en provenance d'un certificat X.509 contenu dans un message de certificat TLS.

9. Système selon la revendication 8, dans lequel le module d'atténuation des attaques par mystification en itinérance 5G est configuré pour obtenir (800) le premier identificateur pour le premier nœud par l'étape consistant à extraire un nom FQDN (fully qualified domain name - nom de domaine complet) pour le premier nœud extrait en provenance d'une extension de noms alternatifs de sujet du certificat X.509.

10. Système selon l'une quelconque des revendications 7 à 9, dans lequel le mandataire SEPP (126) est un mandataire SEPP répondant dans une procédure de négociation de capacité de sécurité N32-c et dans lequel le module d'atténuation des attaques par mystification en itinérance 5G est configuré pour obtenir (802) le deuxième identificateur pour le premier nœud en extrayant le deuxième identificateur pour le premier nœud en provenance d'un attribut d'expéditeur d'un élément d'information SecNegotiateReqData du message de négociation de capacité de sécurité N32-c.

11. Système selon l'une quelconque des revendications 7 à 9, dans lequel le mandataire SEPP (126) est un mandataire SEPP initiateur dans une procédure de négociation de capacité de sécurité N32-c et dans lequel le module d'atténuation des attaques par mystification en itinérance 5G est configuré pour obtenir (802) le deuxième identificateur pour le premier nœud en extrayant le deuxième identificateur pour le premier nœud en provenance d'un attribut d'élément d'information d'expéditeur d'un élément d'information SecNegotiateRspData du message de négociation de capacité de sécurité N32-c.

12. Système selon l'une quelconque des revendications 7 à 11, dans lequel le module d'atténuation des attaques par mystification en itinérance 5G est configuré pour, en réponse à la détermination comme quoi les premier et deuxième identificateurs pour le premier nœud se correspondent l'un par rapport à l'autre (806) et comme quoi un identificateur correspondant n'est pas présent dans la base de données de mandataires SEPP homologues (814), bloquer (810) les communications inter-réseau PLMN en provenance du premier nœud.

13. Support non transitoire lisible par ordinateur ayant, stockées sur celui-ci, des instructions en mesure d'être exécutées qui, quand elles sont exécutées par un processeur d'un ordinateur, commandent l'ordinateur afin d'effectuer les étapes consistant à :
obtenir (800), par un mandataire SEPP (security edge protection proxy - mandataire de protection de bord de sécurité), et en provenance d'un message TLS (transport layer security - sécurité de couche de transport) en provenance d'un premier nœud, un premier identificateur pour le premier nœud ;
obtenir (802), par le mandataire SEPP et en provenance d'un message de négociation de capacité de sécurité N32-c en provenance du premier nœud, un deuxième identificateur pour le premier nœud ;
comparer (804) les premier et deuxième identificateurs pour le premier nœud ;
en réponse à la détermination comme quoi les premier et deuxième identificateurs ne se correspondent pas l'un par rapport à l'autre (806), déterminer comme quoi le deuxième identificateur pour le premier nœud est invalide (808), et,
en réponse à la détermination comme quoi le deuxième identificateur pour le premier nœud est invalide, bloquer (810) les communications inter-réseau PLMN (public land mobile network - réseau mobile terrestre public), avec le premier nœud ;
**caractérisé en ce que** l'appareil comporte par ailleurs les étapes consistant à,
en réponse à la détermination comme quoi les premier et deuxième identificateurs se correspondent l'un par rapport à l'autre (806), effectuer (812) une consultation dans une base de données de mandataires SEPP homologues en utilisant l'un des premier et deuxième identificateurs pour le premier nœud ; et
en réponse à la détermination comme quoi les premier et deuxième identificateurs pour le premier nœud se correspondent l'un par rapport à l'autre (806) et comme quoi un identificateur correspondant est présent dans la base de données de mandataires SEPP homologues (814), permettre (816) les communications inter-réseau PLMN en provenance du premier nœud.

14. Support non transitoire lisible par ordinateur selon la revendication 13, dans lequel l'étape consistant à obtenir (800) le premier identificateur pour le premier nœud en provenance d'un message TLS comprend l'étape consistant à obtenir le premier identificateur en provenance d'un certificat X.509 contenu dans un message de certificat TLS.

15. Support non transitoire lisible par ordinateur selon la revendication 14, dans lequel l'étape consistant à obtenir (800) le premier identificateur pour le premier nœud comprend l'étape consistant à extraire un nom FQDN (fully qualified domain name - nom de domaine complet) pour le premier nœud en provenance d'une extension de noms alternatifs de sujet du certificat X.509.
